(19) Europäisches Patentamt
European Patent Office
Office européen des brevets

(11) Publication number: 0 006 334
B1

(12) **EUROPEAN PATENT SPECIFICATION**

(45) Date of publication of patent specification: 02.03.83

(51) Int. Cl.³: C 08 G 81/02, C 08 G 59/14, C 08 F 8/14 //C09D3/58

(21) Application number: 79301098.4

(22) Date of filing: 11.06.79

(54) **Process for preparation of self-emulsifiable epoxy ester copolymer mixtures and products obtained thereby.**

(30) Priority: 12.06.78 US 914471

(43) Date of publication of application: 09.01.80 Bulletin 80/1

(45) Publication of the grant of the patent: 02.03.83 Bulletin 83/9

(84) Designated Contracting States: BE DE FR GB IT NL

(56) References cited:
GB - A - 1 126 977
GB - A - 1 257 603
US - A - 3 390 206
US - A - 4 021 396

(73) Proprietor: MOBIL OIL CORPORATION
150 East 42nd Street
New York New York 10017 (US)

(72) Inventor: Brown, George Lincoln
23 Essex Road
Scotch Plains, New Jersey (US)
Inventor: Spencer, Arthur Theodore
105 Madison Avenue
New Providence, New Jersey (US)
Inventor: de Sorgo, Miksa
50 Edwards Drive
Freehold, New Jersey (US)

(74) Representative: Cooper, John Anthony et al,
Mobil Court 3 Clements Inn
London WC2A 2EB (GB)

EP 0 006 334 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Process for preparation of self-emulsifiable epoxy ester copolymer mixtures and products obtained thereby

This invention relates to a process for the preparation of self-emulsifiable epoxy ester copolymer mixtures useful in the production of aqueous emulsion coating compositions.

Epoxy resins contain a plurality of aromatic groups joined together by ether linkages, and hence provide excellent physical and chemical properties. It has been difficult to employ such resins in aqueous medium because they lack storage stability which is of particular importance when spray application is contemplated, especially for the interior of sanitary cans. In order to employ aqueous coatings of high resin solids content at the desired viscosity, it has been necessary to employ emulsion systems in which a water immiscible component is suspended in an aqueous continuum by means of an emulsifying agent. However, aqueous coating compositions containing emulsifying agents have the great disadvantage than when used for coating the interior of sanitary cans, the emulsifier tends to be removed from the dried coating by the contents of the can, thereby contaminating those contents.

U.S. Patent 4,021,396 describes the preparation of aqueous, self-emulsified coating compositions from acrylic polymers and epoxy resins by inverting an organic solution of a mixture of those components with water to form a hydrosol. The final compositions, however, have a very low proportion (less than 10%) of their total solids contents derived from the epoxy resin due to the fact that the acrylic polymers contain equally low proportions of acrylic acid units.

It will be appreciated that it is desirable that any aqueous, epoxy resin-based coating composition contains as high a proportion as possible of epoxy resin-derived solids and that the proportion of diepoxide in the aromatic polyether mixture constituting the epoxy resin and the average molecular weight of the aromatic polyether mixture should both be as high as possible in order that the excellent physical and chemical properties of the epoxy resins are carried over into the final coating compositions. However, it has been found that high molecular weights result in the epoxy resins being incompatible with acidic copolymers.

Thus, although both the epoxy resin and the acidic copolymer may be soluble in the same organic solvent, their respective organic solutions are immiscible. This incompatibility can be resolved to some extent by providing in the epoxy resin an adequate proportion of diepoxides to react with the acidic copolymer to increase its molecular weight in order further to improve the properties of the final coating composition, but reactions of this type resulting in substantial esterification of the epoxy groups, lead to gelation of the product.

Hence, although high molecular weight epoxy resins containing high proportions of diepoxide promise the most satisfactory coating compositions, they present the greatest difficulties with respect both to compatibility with other reaction components and to gel formation.

The present invention is based on the observation that non-gelled, epoxy ester compositions which are self-emulsifiable in water and which contain upward of 40% by weight of their solids contents derived from epoxy resins of molecular weight of at least 1500, can be produced from such epoxy resins and acidic copolymers in the presence of relatively large proportion of a conventional amine esterification catalyst. This catalyst avoids gelation of the reaction product of the epoxy resin and acidic copolymer in a fashion which is not fully understood, although the ester product is clearly different from that which is normally obtained when selecting materials and proportions which do not lead to gelation.

In accordance with the invention, there is provided a process for preparing a non-gelled, self-emulsifiable epoxy ester copolymer which comprises reacting together

(i) an acidic copolymer comprising a solution copolymer of monoethylenically unsaturated monomers containing from 20 to 80 percent by weight, based on the total monomers, of monoethylenically unsaturated carboxylic acid monomers; and

(ii) an epoxy resin comprising an aromatic polyether containing oxirane groups and having an average molecular weight of at least 1500 at least 5% of the aromatic polyethers being constituted by diepoxide, in an amount sufficient to constitute at least 40 percent of the total resin solids and to provide a ratio of oxirane groups to carboxyl groups in the acidic copolymer of from 1:2 to 1:20;

in an organic solvent in the presence of more than 2 percent by weight, based on the reactants, of an amine esterification catalyst at a temperature sufficient to cause substantially all of the oxirane groups in the epoxy resin to be consumed by the carboxyl groups in the acidic copolymer.

Aqueous coating compositions can be produced from the resulting non-gelled, organic solution of epoxy ester copolymer by reacting at least a portion of the residual carboxyl functionality with a base and diluting the solution with water to form an aqueous emulsion. A small proportion of an aminoplast or phenoplast resin may also be added to enhance cure of the resulting coatings upon baking.

The solvent-soluble carboxyl-functional polymer may be of diverse chemical type, but it is necessarily a solution copolymer of monoethylenically unsaturated monomers comprising at least 20% and at most 80% of monoethylenically unsaturated carboxylic acid monomer, based on the total weight of monomers. These solution copolymers are themselves well known, being unusual in this invention solely because of the large amount of copolymerized carboxylic acid. The balance of the copolymer is preferably nonreactive under the contemplated conditions of polymerization, prereaction with the epoxy resin, and cure, but small amounts of other reactive monomers may be tolerated, such as hydroxy monomers illustrated by 2-hydroxy ethyl methacrylate, amide monomers illustrated by acrylamide, or N-methylol monomers illustrated by N-methylol acrylamide.

The nonreactive monomers are illustrated by acrylate and methacrylate esters, such as ethyl acrylate, methyl methacrylate or isobutyl methacrylate, styrene or vinyl toluene, vinyl acetate, vinyl chloride, vinylidene chloride and acrylonitrile. Their function herein is to enhance solvent solubility and film formation.

The carboxyl-functional monomer should be present in large proportion so as to provide excess carboxyl functionality, as will be discussed. The preferred minimum proportion of carboxylic monomers is 30% of the weight of monomers. Methacrylic acid provides the best hydrolytic stability and is very much preferred, but other acids are also useful, such as fumaric acid, acrylic acid, crotonic acid and itaconic acid. Up to 80% of the monomers may be carboxyl-functional, but the maximum proportion is more generally determined by retention of solvent solubility.

The carboxyl-functional polymers which are preferred generally have an average molecular weight in the range of 5,000 to 20,000, preferably 7,000—15,000. Molecular weight can be controlled by solids content during polymerization, or catalyst concentration, or polymerization temperature, these being known expedients for this purpose. Mercaptan chain termination is preferably avoided since sanitary can use is contemplated for the final coating compositions and mercaptans are bad smelling materials.

The copolymer must be made in organic solvent solution so that it is nongelled and organic solvent-soluble.

The solution copolymer is preformed and subsequently reacted with the epoxy resin in the presence of an esterification catalyst, a reaction which would normally lead to gelation. It is frequently desired or at least advantageous that the final esterification product includes aromatic polyether devoid of oxirane functionality which is not combined by esterification with the carboxyl-functional polymer. This may be preferably achieved using an epoxy resin which is a mixture of aromatic polyethers devoid of oxirane functionality together with aromatic polyethers having one or two oxirane groups. This procedure maximizes compatibility since although it is desired to chemically couple together with the carboxyl copolymer as much epoxide as possible and the inclusion of monoepoxide is helpful in this respect, the overall perspective is still the same, namely, the more epoxide, monoepoxide or diepoxide, the more total aromatic polyether can be chemically combined with the carboxyl copolymer. The maximum proportion of epoxide, especially diepoxide, is limited in the absence of this invention. More particularly, without this invention, gelation occurs using the molecular weight and oxirane functionality which is desired, but this gelation is avoided herein. The high molecular weight and complexity of the copolymers formed has the additional advantage that the proportion of curing agent needed is reduced, and this in turn provides tougher and more impact resistant cured coatings. Indeed, considerable solvent resistance is obtained in the absence of curing agent, so that the curing agent can be omitted altogether. However, the aromatic polyether devoid of oxirane functionality can be omitted, or it can be added after esterification is complete in which case the mixture can be heated and agitated to enhance the intimacy of the association between the various components.

Epoxy resins, and particularly diglycidyl ethers of aromatic polyethers, are well known and commercially available. The usual aromatic polyether backbone of epoxy resins is based on a bisphenol which defines a pair of phenolic groups joined together through an intervening divalent hydrocarbon. The preferred bisphenols have the formula:

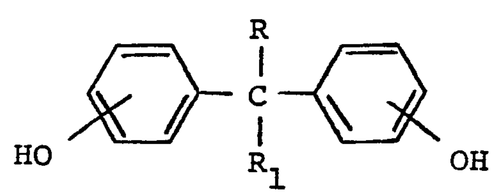

in which R and $R_1$ are alkyl groups containing up to 8 carbon atoms. Bisphenol A is particularly preferred, this compound having the two OH groups in the para position and R and $R_1$ are each methyl.

The usual commercially available epoxy resins are made by reaction of epichlorohydrin with Bisphenol A and comprise or consist of diglycidyl ethers of diverse chain lengths having average molecular weights of 350 to 6,000. Epoxy resins having an average molecular weight of at least 1500 ar used herein, and those containing at least 5% and preferably at least 10% by weight of aromatic polyether containing oxirane functionality and at least 5% by weight of aromatic polyether devoid of oxirane

functionality. A simple way of obtaining such materials is by reacting a lower molecular weight diglycidyl ether with between 1 and 2 molar proportions of a bisphenol. This increases the molecular weight of the resin and provides some bisphenol terminal groups. It is especially preferred to use a mixture containing from 10% to 95% by weight of aromatic polyethers which are diglycidyl ethers and more especially preferred to use a mixture containing at least 10% by weight of aromatic polyethers which are devoid of oxirane functionality. It is surprising to be able to combine the higher molecular weight epoxy resins preferred herein with preformed copolymers to provide non-gelled compositions which do not separate on standing, and this is particularly true where the weight proportion of the epoxy resin which is present is large. It is especially surprising when a proportion of the epoxy resin is devoid of oxirane functionality so that compatibility by coreaction with this component cannot be expected. When 40% to 90% of the aromatic polyethers are diglycidyl ethers, good solvent resistance is obtained without external curing agents.

Defunctionalization of the epoxy resin can be performed in various ways. Reaction with a phenol, particularly a bisphenol has been mentioned previously. Basic catalysts are normally used in this reaction. Similarly, one can use a carboxylic acid, such as benzoic acid or octanoic acid, to defunctionalize the epoxy resin, basic catalysts being again appropriate. In addition, alcohols can be used, such as octanol, and the etherification reaction with alcohol is fostered by the presence of a catalyst such as boron trifluoride.

The epoxy resins which are used herein possess hydroxy groups in addition to epoxy groups, and the higher the molecular weight, the more hydroxy groups are present. In addition, and when the epoxy resin is defunctionalized in order to reduce the proportion of diepoxide therein, additional hydroxy groups are provided. These hydroxy groups may participate in the final curing reaction.

With reference to preferred epoxy ester copolymer compositions of the invention, the epoxy resin used is a mixture of bisphenolic polyethers, at least 10% of which contain oxirane functionality, and at least 10% of which are devoid of oxirane functionality. At least 5% of the total bisphenolic polyethers are provided by diglycidyl ethers. As previously indicated, these bisphenolic polyethers are of relatively high molecular weight, possessing an average molecular weight of at least 1500. The acidic copolymer which is combined with the epoxy resin is a solution copolymer preferably derived from 30—70% of methacrylic acid, the balance of the monomers being nonreactive as previously defined, the proportions being based on total monomers. The epoxy resin mixture preferably constitutes from 50—80% of the total resin solids content, and it preferably provides oxirane groups in a stoichiometric ratio to carboxyl groups in the acidic copolymer of from 1:4 to 1:10. From 30% to 90% of the carboxyl functionality in the polymer product is then preferably reacted with a volatile amine which may be ammonia, or other volatile amine, such as triethylamine or, preferably dimethylaminoethanol.

The esterification reaction involving oxirane groups of the epoxy resin and carboxyl functionality is a conventional reaction which is normally carried out in the presence of a small amount of an amine esterification catalyst. An appropriate catalyst is methyl amino ethanol, but many others are known. These catalysts are normally used in an amount of from 0.1—0.3% of the materials subjected to esterification, 0.2% being typical. Up to about 2% of catalyst is broadly contemplated by the art, but rarely used because it would be thought to be a waste of material. Unfortunately, conventional practice produces a gelled product. From the standpoint of gelation theory, gelation normally results when there is present more than one equivalent of oxirane functionality in a difunctional epoxide molecule per molecule of carboxyl-functional polymer, and it is frequently desired to exceed this level of use, it being appreciated that all the detectable oxirane is consumed herein.

In accordance with the present invention, this difficult esterification reaction is carried out in an organic solvent medium in the presence of greater than 2% of an amine esterification catalyst, based on the weight of the reactants subjected to esterification. The use of dimethyl amino ethanol as a typical amine esterification catalyst has previously been mentioned, but diverse other amines can be used in the esterification reaction. Other amine esterification catalysts are illustrated by dimethyl benzylamine, ethanolamine, diethanolamine and morpholine. The choice of amines possessing superior capacity to catalyze the conventional esterification of a carboxylic acid with an epoxy group is itself a matter of common knowledge in the art.

Up to 15% by weight of amine esterification catalyst can be used, bit it is preferred to employ 4% to 10%. The maximum proportion of catalyst is not critical, but there is a natural desire to avoid the use of an unnecessary excess.

The esterification reaction is carried out in an organic solvent medium. The solvents are subject to wide variation, so long as they do not interfere with the achievement of an emulsion when the epoxy ester copolymer salts are diluted with water. The fact of achieving an emulsion is easily observed by the fact that the aqueous system which is produced is milky, and not clear. Organic solvents of limited water miscibility, such as xylene, toluene, and butanol are useful, and they may be used alone or together with water miscible solvents, such as

2-ethoxyethanol or methyl ethyl ketone. Alcoholic solvent mediums are preferred.

The solids content of the solution containing the two resins which are combined by esterification is conveniently from 40% to 75%, more preferably from 55% to 70%. As little solvent as possible is desired to minimize the solvent content of the final aqueous emulsions, and the less solvent, the greater the danger of gelation.

An elevated esterification temperature sufficient to cause the oxirane functionality to react with the carboxyl functionality is used and is maintained until the oxirane functionality is substantially entirely consumed. Generally, temperatures of from 60°C to 130°C are useful, but higher temperature speeds the reaction. Esterification of the hydroxy groups is to be avoided during polymer preparation, so water or solvent vapors are not removed and excessive temperature is avoided. The esterification temperature is entirely conventional.

As stated above, the large proportion of amine esterification catalyst functions to avoid gelation in a fashion which is not fully understood and the ester product is different from that which is normally obtained using material selection and proportions which do not produce gelation.

It is possible that the large amount of amine causes salt formation with the carboxyl groups present which leads to the formation of colloidal particles in the solvent medium as the esterification reaction increases the molecular weight. This withdraws material from solution before it can gel and may provide the reason why systems which theoretically should form a useless gel, do not do so. In any event, the usual non-gelled products are clear compatible solutions. The products obtained when the systems esterified tend to gel, are colloidal dispersions as can be observed by noting their cloudy appearance.

The coating composition of this invention is primarily useful for coating aluminum, tinplated steel, pretreated metals, steel, or metals coated with the same or different resin composition (i.e., a second coat). The coating composition can be used, however, for coating other substrates, such as wood. The most preferred and useful use of the coating composition is for the interior coating of metal containers that will come in contact with food or beverages. Coating can be done by any coating procedure well known to those skilled in the art, including direct roll coating, reverse roll coating, electrodeposition, spraying, flow coating, and the like. The preferred method, however, in coating the interior of metal containers is by spraying. After coating the substrate, the coating is baked for 5 seconds to 30 minutes at between 120°C and 315°C. A typical bake is for 2 minutes at 205°C.

The invention is illustrated in the following example in which all parts are by weight unless otherwise stated.

Example

An acrylic polymer solution is prepared as follows:

| | Parts by weight |
|---|---|
| Ethylene glycol monobutyl ether | 2476.0 g |
| Methacrylic acid monomer | 2766.4 g |
| Styrene monomer | 2766.4 g |
| Ethyl acrylate monomer | 291.2 g |
| Tertiary butyl peroxy isopropyl carbonate | 388.3 g |
| TOTAL | 8688.3 g |

All of the above components are premixed in a mixing vessel. 1464.8 g of the premix are added to a reactor equipped with a stirrer, reflux condenser, thermometer, additional funnel and nitrogen inlet. The nitrogen flow is started and the batch is heated to 120°C. The remaining 7223.5 g of the premix are added via the addition funnel over a three hour period. Temperature is maintained at 120°C. The batch is held for an additional two hours at 120°C after which the batch is cooled to room temperature. The resulting acrylic polymer solution has a solids content of 71%. The acrylic polymer has a composition of methacrylic acid/styrene/ethyl acrylate in the weight ratio of 47.5/47.5/5. The polymer has an acid number of 300.

The epoxy acrylate polymer solution is prepared as follows:

| | Parts by Weight |
|---|---|
| Ethylene glycol monobutyl ether | 67.0 g |
| n-butanol | 200.0 g |
| Acrylic polymer solution (prepared above) | 432.0 g |
| Dimethylaminoethanol | 60.0 g |
| Epon 1007 epoxy resin | 480.0 g |
| TOTAL | 1239.0 g |

The 67 g ethylene glycol monobutyl ether and the 200 g of n-butanol are charged to a reaction vessel equipped with a stirrer, reflux

condenser, thermometer and a nitrogen inlet. The nitrogen flow is started and the solvents are heated to slow reflux at 126°C. The acrylic polymer solution is added and dissolved. The dimethylaminoethanol catalyst is added and stirred until uniform. The Epon 1007 solid epoxy resin is added and dissolved. Epon 1007 is a solid epoxy resin manufactured by Shell Chemical Company and characterized by Y—Z, Gardner-Holdt viscosity in butyl dioxitol at 40% solids, 2000—2500 epoxide equivalent and 5 maximum Gardner Color.

The batch is held for 1.5 hours at 126°C. The batch does not gel but forms an epoxy acrylate polymer solution. The polymer composition is epoxy/acrylic 61/39 by weight. The polymer has an acid number of 77, and an oxirane content less than 0.01 meq/g. This is the smallest detectable amount in the test utilized. The polymer solution has a solids content of 63%.

It is desired to stress that the dimethylaminoethanol catalyst has been employed in a much larger than normal proportion, namely, 7.6% by weight, based on the total weight of materials subjected to the esterification reaction. These materials are the acrylic polymer and the epoxy resin. The reaction conditions are such as to promote reaction between the oxirane group in the Epon 1007 and the carboxyl groups in the acrylic polymer, and these two components are the material subjected to esterification. In contrast, a repeat of the Example utilizing 1.6 grams of dimethylaminoethanol (a normal proportion of esterification catalyst corresponding to 0.2% by weight, based on the materials subjected to esterification) causes the formation of a useless gel in about 25 minutes after the addition of Epon 1007 is completed. With the larger proportion of amine catalyst which avoids gelation being present, a 25 minute reaction at 126°C does not result in gelation and the reaction can be continued to completely consume the oxirane functionality.

A water dispersion of the non-gelled epoxy acrylate polymer solution is prepared as follows:

| | Parts by Weight |
|---|---|
| Epoxy acrylate polymer solution (prepared above) | 794.0 g |
| Deionized water | 918.0 g |
| TOTAL | 1712.0 g |

The epoxy acrylate polymer solution prepared above is heated to 100°C and placed into a dispersion vessel equipped with an agitator. Agitation is started and the deionized water is added over a 15 minute period. No attempt is made to maintain the temperature of the batch at 100°C. The temperature of the batch after the water addition is 35°C and is further cooled to room temperature. The dispersion is stable and has the following physical properties: 29.2% solids, 7.7 pH, 0.165 Pas viscosity (Brookfield #1 spindle, 6 RPM), 0.13 μm particle size, and 27% by volume organic volatiles.

The epoxy acrylate dispersion prepared above is modified by blending with a melamine resin (Cymel® 370, American Cyanamid Co.) at the ratio of 2.5 g melamine resin per 100 g dispersion. Films of the above are cast on aluminum and tin plate with wire-wound bars. The coated panels are baked in a forced air oven at 204C for 75 seconds total time. The dry films are 2.5 μm thick, are clear and high gloss and exhibit excellent properties as shown below.

| | Substrate | |
|---|---|---|
| | Aluminum | Tin Plate |
| Methyl ethyl ketone double rubs | 200 | 200 |
| Dry adhesion | 10 | 10 |
| Pasteurization blush | 10 | 10 |
| Pasteurization adhesion | 10 | 10 |
| Wedge bend flexibility | 4 | 5 |

(Rating: 10 = no failure,
0 = Complete failure)

## Claims

1. A process for preparing a non-gelled self-emulsifiable epoxy ester copolymer which comprises reacting together

(i) an acidic copolymer comprising a solution copolymer of monoethylenically unsaturated monomers containing from 20 to 80 percent by weight, based on the total monomers, of monoethylenically unsaturated carboxylic acid monomers; and

(ii) an epoxy resin comprising an aromatic polyether containing oxirane groups and having an average molecular weight of at least 1500, at least 5% of the aromatic polyethers being constituted by diepoxide, in an amount sufficient to constitute at least 40 percent of the total resin solids and to provide a ratio of oxirane groups to carboxyl groups in the acidic copolymer of from 1:2 to 1:20;

in an organic solvent in the presence of more than 2 percent by weight, based on the reactants, of an amine esterification catalyst at a temperature sufficient to cause substantially all of the oxirane groups in the epoxy resin to be consumed by the carboxyl groups in the acidic copolymer.

2. A process according to claim 1, wherein at

least a portion of the free carboxyl groups of the epoxy ester copolymer product is reacted with a base.

3. A process according to claim 2, wherein the base is dimethylaminoethanol.

4. A process according to any one of claims 1 to 3, wherein the monoethylenically unsaturated carboxylic acid monomer is methacrylic acid.

5. A process according to claim 4, wherein the acidic copolymer is a solution copolymer of monoethylenically unsaturated monomers containing from 30 to 70 percent, based on the total monomers, of methacrylic acid.

6. A process according to any one of claims 1 to 5, wherein the acidic compolymer has a molecular weight of 5,000 to 20,000.

7. A process according to any one of claims 1 to 6, wherein the epoxy resin is a mixture of aromatic polyethers at least 5 percent by weight of which contain oxirane groups and at least 5 percent by weight of which are devoid of oxirane groups.

8. A process according to any one of claims 1 to 7, wherein the epoxy resin is a mixture of aromatic polyethers from 40 to 90 percent by weight of which are diglycidyl ethers.

9. A process according to any one of claims 1 to 8, wherein the epoxy resin is used in an amount sufficient to constitute from 50 to 80 percent of the total resin solids.

10. A process according to any one of claims 1 to 9, wherein the epoxy resin is used in an amount sufficient to provide a ratio of oxirane groups to carboxyl groups in the acidic copolymer of from 1:4 to 1:10.

11. A process according to any one of claims 1 to 10, wherein the amine esterification catalyst is used in an amount of from 4 to 10 percent by weight, based on the reactants.

12. A process according to any one of claims 1 to 11, wherein the amine esterification catalyst is dimethylaminoethanol.

**Revendications**

1. Procédé pour préparer un époxy ester copolymère auto-émulsifiable non gélifié qui comprend la réaction mutuelle de

(1) copolymère acide constitué d'un copolymère de solution de monomères à insaturation monoéthylénique contenant 20 à 80% en poids, par rapport aux monomères totaux, d'acides carboxyliques à insaturation monoéthylénique monomères; et

(2) une résine époxy constituée d'un polyéther aromatique contenant des groupes oxirannes et ayant un poids moléculaire moyen d'au moins 1 500, au moins 5% des polyéthers aromatiques étant constitués de diépoxydes, en une quantité suffisante pour constituer au moins 40% des matières sèches totales de la résine et pour créer un rapport des groupes oxirannes aux groupes carboxy dans le copolymère acide de 1/2 à 1/20; dans un solvant organique en présence de plus de 2% en poids, par rapport aux composés réagissants, d'un catalyseur d'estérification de type amine à une température suffisante pour que pratiquement la totalité des groupes oxirannes de la résine époxy soient consommés par les groupes carboxy du copolymère acide.

2. Procédé selon la revendication 1, dans lequel on fait réagir avec une base au moins une portion des groupes carboxy libres de l'époxy ester copolymère produit.

3. Procédé selon la revendication 2, dans lequel la base est le diméthylaminoéthanol.

4. Procédé selon l'une quelconque des revendications 1 à 3, dans lequel l'acide carboxylique à insaturation monoéthylénique monomère est l'acide méthacrylique.

5. Procédé selon la revendication 4, dans lequel le copolymère acide est un copolymère de solution de monomères à insaturation monoéthylénique contenant 30 à 70% par rapport aux monomères totaux d'acide méthacrylique.

6. Procédé selon l'une quelconque des revendications 1 à 5, dans lequel le copolymère acide a un poids moléculaire de 5 000 à 20 000.

7. Procédé selon l'une quelconque des revendications 1 à 6, dans lequel la résine époxy est un mélange de polyéthers aromatiques dont au moins 5% en poids contiennent des groupes oxirannes et dont au moins 5% en poids sont dépourvus de groupes oxirannes.

8. Procédé selon l'une quelconque des revendications 1 à 7, dans lequel la résine époxy est un mélange de polyéthers aromatiques dont 40 à 90% en poids sont des éthers diglycidyliques.

9. Procédé selon l'une quelconque des revendications 1 à 8, dans lequel la résine époxy est utilisée en une quantité suffisante pour constituer 50 à 80% de la totalité des matières sèches de la résine.

10. Procédé selon l'une quelconque des revendications 1 à 9, dans lequel la résine époxy est utilisée en une quantité suffisante pour établir un rapport des groupes oxirannes aux groupes carboxy dans le copolymère acide de 1/4 à 1/10.

11. Procédé selon l'une quelconque des revendications 1 à 10, dans lequel le catalyseur d'estérification de type amine est utilisé à raison de 4 à 10% en poids par rapport aux composés réagissants.

12. Procédé selon l'une quelconque des revendications 1 à 11, dans lequel le catalyseur d'estérification de type amine est le diméthylaminoéthanol.

**Patentansprüche**

1. Ein Verfahren zur Herstellung eines nichtgelierten selbstemulgierbaren Epoxidester-Copolymeren, das umfaßt die Umsetzung von

(i) einem aciden Copolymeren, das ein Lösungs-Copolymeres von monoethylenisch

ungesättigten Monomeren umfaßt, die von 20 bis 80 Gew.-%, bezogen auf die Gesamtmonomeren, von monoethylenisch ungesättigten Carbonsäuremonomeren enthalten; mit

(ii) einem Epoxidharz, das einen aromatischen Polyether umfaßt, der Oxirangruppen enthält und ein durchschnittliches Molekulargewicht von mindestens 1500 aufweist, wobei mindestens 5% der aromatischen Polyether Diepoxid-Bausteine sind, in einer Menge, die ausreicht, mindestens 40% der gesamten Harzfeststoffe zu bilden und ein Verhältnis von Oxirangruppen zu Carboxylgruppen in dem sauren Copolymeren von 1:2 bis 1:20 zu erzeugen;

in einem organischen Lösungsmittel in Gegenwart von mehr als 2 Gew.-%, bezogen auf die Reaktanten, eines Amin-Veresterungskatalysators bei einer Temperatur, die ausreicht, daß im wesentlichen alle Oxirangruppen in dem Expoxidharz von den Carboxylgruppen in dem sauren Copolymeren verbraucht werden.

2. Ein Verfahren nach Anspruch 1, bei dem mindestens ein Teil der freien Carboxylgruppen des Epoxidester-Copolymer-Produkts mit einer Base umgesetzt ist.

3. Ein Verfahren nach Anspruch 2, bei dem die Base Dimethylaminoethanol ist.

4. Ein Verfahren nach einem beliebigen der Ansprüche 1 bis 3, bei dem das monoethylenisch ungesättigte Carbonsäuremonomere Methacrylsäure ist.

5. Ein Verfahren nach Anspruch 4, bei dem das saure Copolymere ein Lösungs-Copolymeres von monoethylenisch ungesättigten Monomeren ist, die von 30 bis 70%, bezogen auf die Gesamtmonomeren, Methacrylsäure enthalten.

6. Ein Verfahren nach einem beliebigen der Ansprüche 1 bis 5, bei dem das saure Copolymere ein Molekulargewicht von 5 000 bis 20 000 aufweist.

7. Ein Verfahren nach einem beliebigen der Ansprüche 1 bis 6, bei dem das Epoxidharz eine Mischung von aromatischen Polyethern ist, von denen mindestens 5 Gew.-% Oxirangruppen enthalten und mindestens 5 Gew.-% frei von Oxirangruppen sind.

8. Ein Verfahren nach einem beliebigen der Ansprüche 1 bis 7, bei dem das Epoxidharz eine Mischung von aromatischen Polyethern ist, von der bis 40 bis 90 Gew.-% Diglycidylether sind.

9. Ein Verfahren nach einem beliebigen der Ansprüche 1 bis 8, bei dem das Epoxidharz in einer Menge verwendet wird, die ausreicht, 50 bis 80 Gew.-% der gesamten Harz-Feststoffe zu bilden.

10. Ein Verfahren nach einem beliebigen der Ansprüche 1 bis 9, bei dem das Epoxidharz in einer Menge verwendet wird, die ausreicht, ein Verhältnis von Oxirangruppen zu Carboxylgruppen in dem sauren Copolymeren von 1:4 bis 1:10 zu erzeugen.

11. Ein Verfahren nach einem beliebigen der Ansprüche 1 bis 10, bei dem der Amin-Veresterungskatalysator in einer Menge von 4 bis 10 Gew.-%, bezogen auf die Reaktanden, verwendet wird.

12. Ein Verfahren nach einem beliebigen der Ansprüche 1 bis 11, bei dem der Amin-Veresterungskatalysator Dimethylaminoethanol ist.